Europäisches Patentamt

European Patent Office

Office européen des brevets

(11) Numéro de publication: **0 330 582 B1**

(12) # FASCICULE DE BREVET EUROPEEN

(45) Date de publication de fascicule du brevet: **22.12.93** (51) Int. Cl.⁵: **B01D 21/01**, C02F 1/52

(21) Numéro de dépôt: **89400527.1**

(22) Date de dépôt: **24.02.89**

(54) **Procédé et installation de traitement d'eau par décantation faisant intervenir du sable fin.**

(30) Priorité: **25.02.88 FR 8802288**

(43) Date de publication de la demande:
**30.08.89 Bulletin 89/35**

(45) Mention de la délivrance du brevet:
**22.12.93 Bulletin 93/51**

(84) Etats contractants désignés:
**BE CH DE ES GB IT LI NL SE**

(56) Documents cités:
EP-A- 0 087 223     EP-A- 0 139 572
US-A- 4 142 970     US-A- 4 190 539
US-A- 4 290 898     US-A- 4 388 195

**WASSERWIRTSCHAFT-WASSERTECHNIK,
vol. 8, août 1958, Berlin-Est (DE); W. CHRIST
et al., pp. 361-364&NUM;**

(73) Titulaire: **OMNIUM DE TRAITEMENTS ET DE
VALORISATION (OTV)
Le Doublon
11 avenue Dubonnet
F-92407 Courbevoie Cédex(FR)**

(72) Inventeur: **Bablon, Guy Pierre
19, Le Pré des Coulons
F-78810 Feucherolles(FR)**
Inventeur: **Desbos, Gilbert
9bis, Rue Laffitte
F-78600 Maisons-Laffitte(FR)**

(74) Mandataire: **Rinuy, Santarelli
14, avenue de la Grande Armée
F-75017 Paris (FR)**

EP 0 330 582 B1

## Description

L'invention concerne un procédé et une installation de traitement d'eau (notamment clarification - épuration) par coagulation - décantation.

Ce traitement vise principalement à éliminer dans des eaux brutes les matières qui y sont en suspension. Ces eaux ainsi clarifiées subissent ensuite des opérations subséquentes de traitement qui les rendent, selon les cas, acceptables pour la consommation domestique, utilisables pour des besoins industriels ou agricoles, ou restituable au milieu naturel.

Les particules en suspension qu'il s'agit d'éliminer peuvent être de natures très diverses, de très petites tailles (de l'ordre du micron) et dans des proportions pouvant aussi bien être très faibles que très importante : leur séparation par décantation naturelle ne peut pas se faire directement à grande vitesse, aussi est-il connu d'intégrer au préalable à l'eau brute à traiter des agents auxiliaires de traitement qui, par action chimique ou physique, favorisent la formation et la croissance de particules (couramment appelés flocs) relativement aisées à décanter dans une phase ultérieure. De manière très générale, ces agents auxiliaires comportent des agents coagulants tels que des sels minéraux (sulfate de fer ou d'alumine, chlorure ferrique ...) qui provoquent une hydrolyse des matières en suspension et des agents floculants (polymères du type "polyelectrolyte"...) qui favorisent l'agglomération et la croissance des germes ainsi formés.

Les agrégats ou flocs ainsi formés traversent ensuite une (ou plusieurs) zone de décantation à la partie supérieure de laquelle on récupère de l'eau clarifiée, et à la base de laquelle on récupère des boues parfois revalorisées après traitement approprié.

Ce procédé a fait l'objet de nombreux perfectionnements visant à la fois à augmenter la vitesse de sortie de l'eau clarifiée et la capacité d'extraction des matières en suspension (réduction de la teneur en particules solides et de la turbidité). On peut se référer à ce propos au texte de la Conférence de Mr DAUTHUILLE au Congrès de Nice (15-18 Juin 1987)publié par l'A.G.T.H.M. dans les Actes de ce Congrès.

On a ainsi cherché notamment à accélérer la formation des flocs dans la phase de coagulation - floculation par l'introduction de germes.

Il a ainsi été proposé, dans le brevet FR-1.411.792 déposé le 4 Août 1964, d'injecter à l'eau chargée en réactifs, une substance auxiliaire de clarification, en particulier de fines particules de sable (20 à 200 $\mu$m). Après dispersion de ce sable fin, on fait circuler l'eau brute avec une vitesse continûment décroissante : de haut en bas pour permettre une croissance des flocs formés sur les particules de sable jusqu'à une taille de l'ordre de 1 à 4 mm, tandis que la gravité favorise la stabilisation de la dispersion de sable dand l'eau, puis de bas en haut tandis que la gravité tend à faire retomber vers le fond les flocs lestés par le sable. On récupère les boues sableuses ainsi formées et on en sépare les particules de sable. Dans des décanteurs fonctionnant selon ce principe, connus sous l'appellation "CYCLOFLOC", on obtient couramment des vitesses de décantation de 6 à 8 m/h.

Il est rappelé que la vitesse de décantation (ou "au miroir") est le quotient du débit (en m$^3$/h) par la surface libre (en m$^2$) de la zone de décantation.

Par la suite, il a été proposé, notamment par les brevets FR-1.501.912 (déposé le 28 Septembre 1966) et FR-2.071.027 (déposé le 16 Décembre 1969), un procédé selon lequel on fait traverser de l'eau brute au travers d'un lit fluidisé de matière granuleuse (en pratique du sable), de bas en haut avec une vitesse ascendante continûment décroissante. On prélève dans le lit fluidisé du sable chargé en boues que l'on recycle après séparation des boues. Des blocs lamellaires sont prévus au-dessus du lit fluidisé pour améliorer la décantation. Des décanteurs ou clarificateurs fonctionnant selon ce principe, appelés couramment "FLUORAPID", ont permis d'atteindre des vitesses de sortie (vitesse de surverse ou de décantation) de 8 à 15 m/h.

Plus récemment, il a été développé un procédé de décantation sans sable qui, dans une version décrite dans le brevet FR-2.552.082 déposé le 7 Octobre 1983, préconise de prévoir, entre une chambre de réaction (floculation et/ou précipitation) et une chambre de décantation lamellaire, une chambre intermédiaire d'épaississement et de décantation. La chambre de réaction comprend deux chambres en communication en leurs extrémités inférieure et supérieure ; une hélice à flux axial induit dans la chambre centrale un débit très supérieur au débit d'arrivée de l'eau brute ce qui provoque un recyclage depuis la chambre latérale vers la base de la chambre centrale. A cet endroit parvient également une partie des boues recueillies au fond de la chambre intermédiaire. L'eau chargée en flocs pénètre par surverse dans la partie supérieure de la chambre intermédiaire : les flocs y épaississent et se déposent pour 85 à 90 % au fond. L'eau partiellement clarifiée pénètre ensuite dans la chambre de décantation lamellaire pour y parfaire la décantation : la faible densité résiduelle des flocs permet d'éviter une accumulation des boues sous les lamelles de décantation susceptible de ralentir le processus global de décantation. Il semblerait que l'on puisse obtenir ainsi des vitesses de décantation pouvant atteindre 35 m/h lorsque les contraintes de qualité de l'eau traitée restent modérées, comme c'est le cas des eaux résiduaires urbaines.

On connait par US-A- 4 388 195, un procédé de traitement d'eaux usées par passage dans des zones de mélange avec des réactifs et éventuellement des matériaux granulaires, une zone intermédiaire d'agglomération de flocs dans laquelle une agitation très modérée est induite par un élément rotatif et une zone de décantation, une partie des boues recueillies étant recyclées dans une des zones de mélange.

On appréciera que dans les solutions connues l'épaississement des flocs se fait dans une zone dépourvue de turbulences susceptibles de détériorer des flocs en cours de grossissement.

La présente invention vise à augmenter encore la vitesse de sortie de décantation sans pour autant sacrifier la qualité de l'eau ainsi traitée.

Elle propose ainsi un procédé de traitement d'eau par décantation selon la revendication 1.

Elle propose également une installation de traitement d'eau par décantation selon la revendication 9.

On appréciera que par rapport aux solutions connues, l'invention se caractérise par un usage de matériau granulaire combiné à un maintien de turbulences importantes dans la zone d'agrégation. En outre l'essentiel de la décantation se produit dans la zone de décantation lamellaire, ce que les solutions les plus récentes cherchent justement à éviter.

En fait, rien ne laissait prévoir a priori que l'injection de matériau granulaire pouvait permettre une amélioration de la vitesse de décantation par rapport à l'une quelconque des solutions connues, d'autant que sa présence semblait au contraire présenter des inconvénients : il impose l'adjonction d'un circuit externe de régénération pour en séparer, avant recyclage, les boues formées ; de plus, dans le cas particulier du sable, ses propriétés abrasives indésirables pourraient inciter l'homme de métier à ne pas en faire usage.

Par ailleurs, il n'était pas évident qu'il y ait un quelconque intérêt à prévoir, entre la chambre de réaction et la chambre de décantation lamellaire, une chambre d'agrégation sans qu'il y ait de décantation dans cette dernière. Les solutions les plus récentes prévoient pourtant une telle chambre intermédiaire dans le but exprès d'y effectuer l'essentiel de la décantation.

Enfin et surtout il n'était pas évident qu'il étant possible d'obtenir, sans décantation, une croissance des agrégats formés par agrégation des colloïdes autour des particules de matériau granulaire dans cette chambre intermédiaire : le maintien de ces agrégats en suspension sans décantation suppose en effet un brassage qui semblait être a priori incompatible avec la tenue des matières sur les grains de sable et exclure par conséquent tout phénomène de croissance : l'usage de matériau granulaire semblait donc a priori exclure le principe d'une chambre d'épaississement sans décantation.

Des essais ont pourtant montré que l'invention permet d'atteindre des vitesses de décantation supérieures à celles connues (30 à 60, voire 90 m/h) sans sacrifier pour autant le degré de clarification de l'eau obtenue.

A titre complémentaire, l'invention préconise que le mélange du matériau granulaire avec l'eau brute contenant ses réactifs se fasse dans une zone brassée de fortes turbulences, ce qui diffère sensiblement de l'art antérieur qui prévoyait tout au plus un recyclage peu turbulent entre deux zones séparées par une cloison et dans lesquelles le liquide circule dans des sens opposés.

Le matériau granulaire peut être du sable. Plus généralement il peut être choisi dans l'une ou l'autre de deux grandes catégories de matériaux, qu'ils soient naturels ou obtenus par synthèse. Ainsi, il peut s'agir d'un matériau chimiquement inerte ne participant pas au traitement de l'eau dans les conditions désirées : dans cette catégorie on peut citer notamment, outre le sable ou microsable, le grenat, le basalte, des oxydes métalliques notamment de fer, la ponce... Le matériau peut aussi avoir, outre ses propriétés physiques, une activité chimique et/ou biologique lui permettant de participer au traitement de l'eau ; dans cette catégorie on peut citer notamment le charbon actif, des résines échangeuses d'ions, du carbonate de calcium, des zéolithes ... Selon d'autres critères, on sélectionnera avantageusement un matériau granulaire ayant un potentiel de surface le moins négatif possible, voir positif.

Selon des dispositions préférées éventuellement combinées de procédé selon l'invention :
- on maintient dans la zone de mélange un gradient de vitesse sensiblement supérieur à celui que l'on maintient dans la zone intermédiaire d'agrégation ;
- dans le cas de sable, on établit dans la zone intermédiaire d'agrégation un gradient de vitesse compris entre 400 $s^{-1}$ et 1500 $s^{-1}$ ;
- dans le cas de sable, on établit dans la zone de mélange un gradient de vitesse compris entre 1500 et 4000 $s^{-1}$ ;
- de préférence dans le cas de sable, le gradient de vitesse dans la zone de mélange vaut entre 3000 et 3500 $s^{-1}$, et le gradient de vitesse dans la zone d'agrégation vaut entre 700 et 900 $s^{-1}$.

Selon des dispositions préférées éventuellement combinées de l'installation selon l'invention :

EP 0 330 582 B1

- la chambre de mélange et la chambre intermédiaire d'agrégation sont de section approximativement carrée, et le rapport entre le côté de chacune de ces chambres et la diamètre de l'agitateur correspondant est compris entre 0,5 et 0,8 environ.

- l'élément d'agitation de la chambre de mélange est un mobile à pales mû en rotation autour d'un axe vertical par un moteur adapté à conférer aux pales des vitesses périphériques comprises entre 1 et 2 m/s, tandis que l'élément d'agitation de la chambre intermédiaire d'agrégation est un mobile à pales mû en rotation autour d'un axe vertical par un moteur adapté à conférer aux pales des vitesses périphériques comprises entre 0,2 et 2,5 m/s.

- la circulation de l'eau à partir de la chambre de mélange s'effectue par surverse au-dessus de l'arête horizontale supérieure d'une première paroi de séparation entre la chambre de mélange et la chambre intermédiaire d'agrégation, par sousverse au dessous de l'arête horizontale d'une seconde paroi de séparation entre la chambre intermédiaire d'agrégation et une chambre latérale, par surverse au-dessus de l'arête supérieure d'une cloison de séparation entre cette chambre latérale et un couloir latéral de distribution longeant la chambre de décantation lamellaire, puis par sousverse sous l'arête inférieure d'une paroi de séparation entre ce couloir latéral de distribution et la chambre de décantation lamellaire, cette arête inférieure étant inclinée vers le haut en s'éloignant de la chambre latérale ; on peut aussi inverser ces sens d'écoulement sous réserve de prévoir un nombre approprié de parois ou cloisons de séparation pour que l'écoulement d'eau pénètre par le bas de la chambre de décantation lamellaire.

- la chambre intermédiaire d'agrégation étant approximativement de section carrée, la hauteur entre l'arête supérieure de la première paroi et l'arête inférieure de la seconde paroi est comprise entre 1 et 3, de préférence entre 1 et 1,5 fois le côté de la chambre intermédiaire d'agrégation, et l'agitateur est situé, vis à vis de l'arête supérieure de la paroi, à une profondeur comprise entre 0,5 et 0,9 fois cette hauteur (de préférence entre 0,6 et 0,7).

- l'agitateur de la chambre intermédiaire d'agrégation est une hélice à flux axial, de préférence mue dans un sens tendant à s'opposer à l'écoulement de l'eau.

Des objets, caractéristiques et avantages de l'invention ressortent de la description qui suit, donnée à titre d'exemple non limitatif, en regard des dessins annexés sur lesquels :

- la figure 1 est une vue schématique en coupe longitudinale d'une installation de décantation conforme à l'invention, utilisant du sable fin comme matériau granulaire ;
- la figure 2 est une vue schématique en coupe longitudinale selon la ligne II-II de la figure 3, d'une autre variante de réalisation, sans le circuit de recyclage du sable fin associé ;
- la figure 3 en est une vue de dessus;
- la figure 4 en est une vue en coupe transversale selon la ligne IV-IV de la figure 3;
- la figure 5 en est une vue en coupe transversale selon la ligne V-V de la figure 3 ; et
- la figure 6 en est une vue en coupe transversale selon la ligne VI-VI de la figure 3.

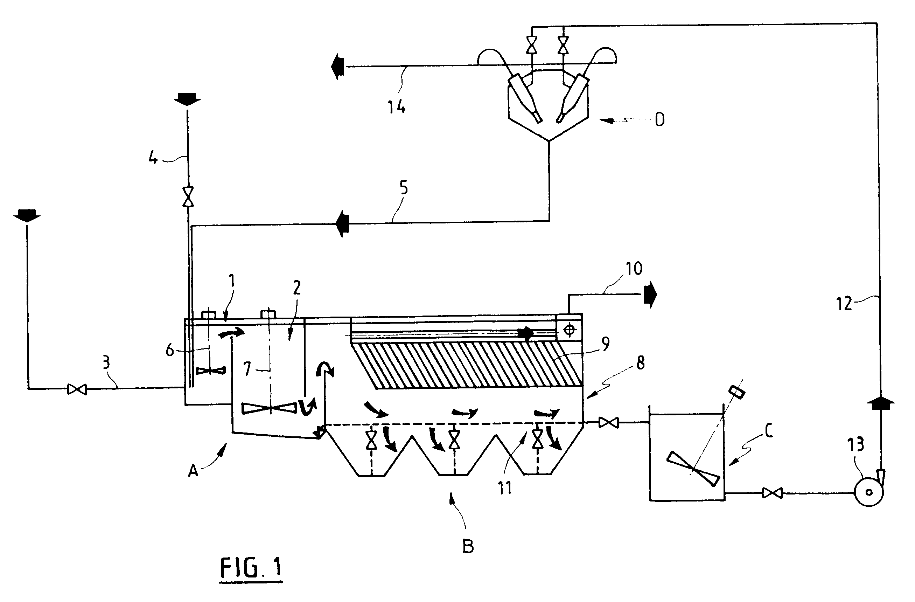

L'installation de la figure 1 comprend une série de chambres communicantes définissant une zone d'agrégation A et une zone de décantation B, un bac de récupération de boues C et un séparateur boues/sable D.

La zone A de réaction-agrégation comporte une chambre de mélange 1 où se produit une destabilisation des colloïdes contenus dans l'eau brute et une chambre intermédiaire d'agrégation 2 où se produit une agrégation des colloïdes destabilisés autour des grains de stable fin. Dans la chambre de mélange 1 débouchent une conduite 3 d'arrivée d'eau brute à traiter, avantageusement déjà coagulée, une conduite 4 d'amenée d'un adjuvant de floculation et une conduite 5 d'arrivée de sable fin en provenance du séparateur D.

Les chambres 1 et 2 comportent toutes deux un agitateur 6 ou 7.

La zone de décantation B comprend une chambre 8 munie de blocs 9 de décantation lamellaire ; à la partie supérieure de cette chambre 8 sont prévus des moyens de captation d'eau aboutissant à une conduite 10 d'évacuation d'eau clarifiée, tandis que des moyens 11 d'évacuation des boues recueillies sous ces blocs lamellaires sont prévus pour évacuer ces boues vers le bac C. Une conduite 12 munie de moyens de pompage 13 amènent les boues chargées en sable fin provenant de la chambre de décantation vers le séparateur D : celui-ci comporte en pratique des hydrocyclones à la sortie desquels sont évacuées les boues sans sable, selon une conduite 14, et le sable fin régénéré selon la conduite 5.

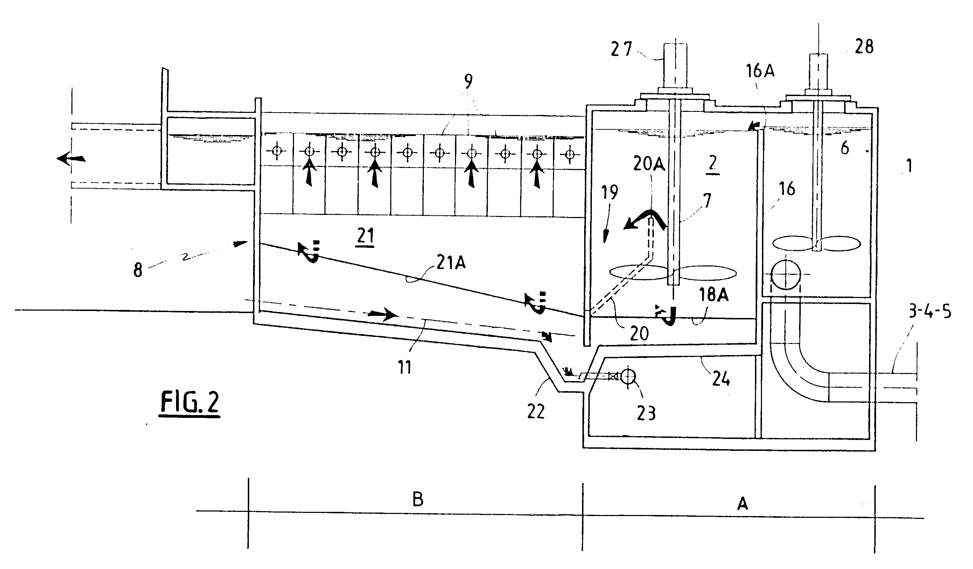

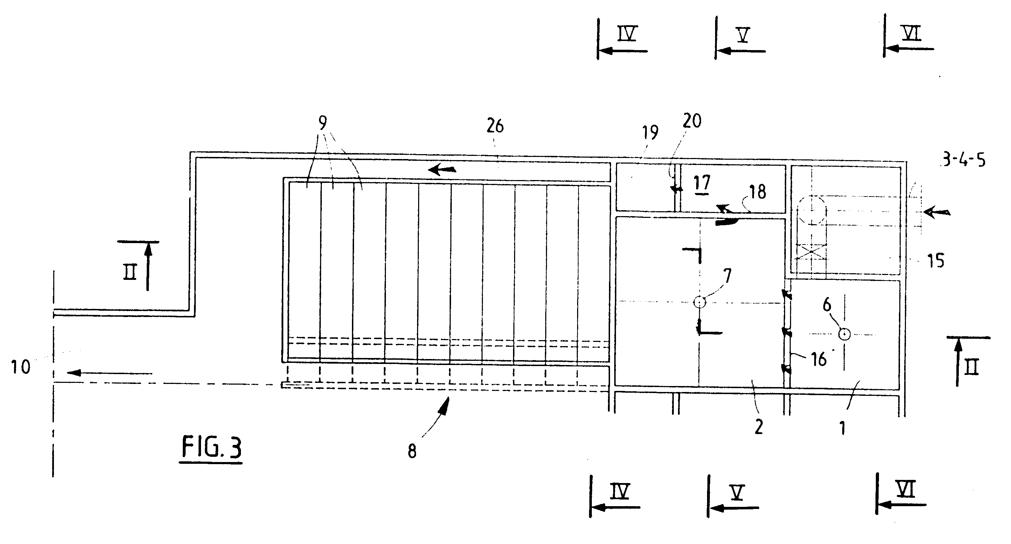

Dans la variante de réalisation représentée plus en détail aux figures 2 à 6, où les mêmes numéros de référence sont utilisés pour les mêmes éléments qu'à la figure 1, les chambres 1 et 2 sont de section carrée avec une profondeur (voir ci-dessous) égale ou assez peu supérieure à la dimension de leurs côtés. Il peut s'agir de cuves en béton ou en acier.

4

A côté de la chambre de mélange 1 se trouve une chambre d'alimentation 15 où aboutissent les diverses conduites d'amenée. Cette chambre de mélange 1 est séparée de la chambre 2 d'agrégation par une cloison 16 terminée par une arête supérieure horizontale 16A formant déversoir.

A côté de la chambre intermédiaire d'agrégation 2 se trouve une chambre latérale 17 qui est séparée par une paroi 18 terminée par une arête inférieure 18A.

Cette chambre latérale 17 communique avec un couloir de distribution 19 dont elle est séparée par une paroi 20 présentant une arête supérieure 20A.

Le couloir latéral de distribution 19 borde longitudinalement la chambre 8 de décantation dont il est séparé par une paroi 21 dont l'arête inférieure 21A est inclinée à partir de la chambre 3, ici à partir approximativement du niveau de l'arête 18A.

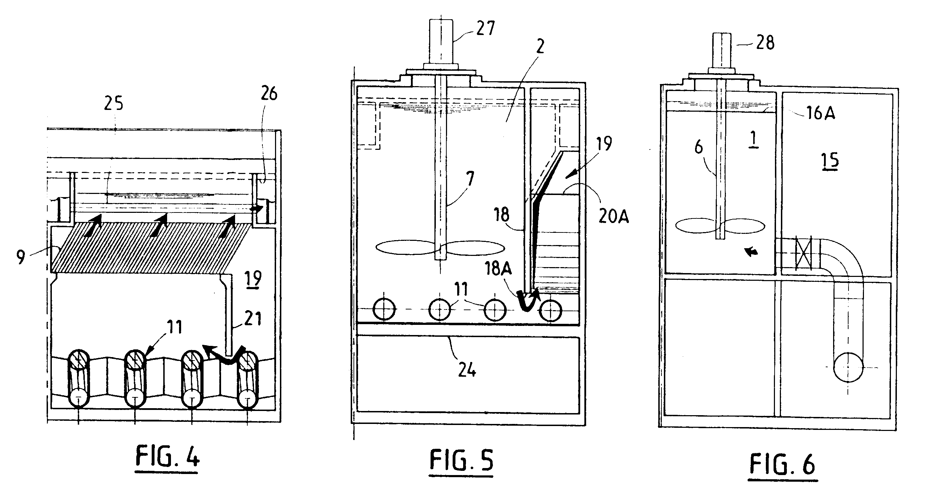

A la partie supérieure de cette chambre 3 sont prévus plusieurs modules lamellaires 9 à lamelles inclinées transversalement vers le haut à droite à la figure 4, dans un sens qui tend donc à ramener l'écoulement vers le couloir.

Sous les blocs lamellaires 9 sont prévus les moyens 11 de collecte des boues jusque dans une tranchée 22 communiquant avec un collecteur de boues 23 situé dans une zone située sous la chambre intermédiaire d'agrégation 3, dont elle est ici séparée par une paroi 24.

Cette tranchée communique avec le bas de la chambre 3, pour pouvoir y récupérer des résidus tombés par gravité. En variante non représentée, cette tranchée se trouve directement sous la chambre 3 sans paroi 24.

Le fond de la chambre 8 de décantation lamellaire est ici incliné ver la travée 22, et les moyens 11 de collecte sont ici constitués par des vis sans fin, à titre d'exemple.

Au-dessus des blocs se trouvent des tubes 25 de captation aboutissant à des goulottes latérales 26 communiquant avec la conduite 10 d'évacuation d'eau.

De manière préférée, la hauteur entre les arêtes 16A et 18A (voir figure 2) est avantageusement comprise entre 1 et 1,2 (ici 1,2) fois le côté de la chambre carrée 3, et l'agitateur 7 est situé, vis à vis de l'arête 16A, à une profondeur approximativement comprise entre 0,75 et 0,90 fois cette hauteur (ici 0,8).

Cet agitateur 7 est du type à pales dont le diamètre vaut environ entre 0,65 et 0,75 fois le côté de la chambre 2, ici 0,7 fois ce côté.

Cet agitateur 7 est mû par un moteur 27 adapté à le faire tourner à une vitesse telle que les extrémités des pales aient une vitesse périphérique environ comprise entre 1 et 2 m/s, tandis que l'agitateur 6 dans la chambre de mélange 1 est mû par un moteur 28 adapté à le faire tourner à une vitesse telle que les extrémités de ses pales (lesquelles ont ici également une valeur d'environ 0,7 fois le côté de la chambre 1) aient une vitesse de l'ordre de 0,7 à 1,5 m/s.

Ces agitateurs ont des pales minces.

L'agitateur 7 est par exemple du type hélice à flux axial et est entraîné en sorte de s'opposer au sens de l'écoulement, générant ainsi de fortes turbulences suffisantes pour maintenir le sable fin en suspension dans le liquide qui s'écoule vers la chambre latérale jusque sous les blocs lamellaires 9.

En fonctionnement, on entraîne l'agitateur 6 à une plus grande vitesse périphérique que l'agitateur 7 en sorte de brasser énergiquement le volume de chaque chambre 1 et 2, en y créant des turbulences toutefois plus élevées dans la chambre 1 que dans la chambre 2.

En raisonnant en termes de gradient de vitesse 6 pour quantifier les déformations induites dans le liquide, on dira que le gradient de vitesse appliqué dans la chambre 1 est supérieur à celui appliqué dans la chambre 2.

Il est rappelé que ce paramètre est défini par :

$$G = (P/\mu.V)^{1/2}$$

avec $P = Np.\rho.N^3D^5$ dans le cas d'un agitateur mécanique, avec :

. G : gradient de vitesse (en $s^{-1}$)

. P : puissance dissipée dans le fluide (en W)

. $\mu$ : viscosité du fluide (kg/m.s)

. V : volume du fluide ($m^3$)

. Np : nombre de puissance de l'agitateur (c'est le coefficient, adimensionnel, de traînée de la pale d'agitation dans le fluide)

. $\rho$ : masse volumique ($kg/m^3$)

. N : vitesse de rotation de la pale d'agitation (tour/s)

. D : diamètre de la pale d'agitation (m)

L'intérêt de ce paramètre est notamment discuté dans l'article de M. CORNET : "Détermination des gradients hydrauliques dans les différentes phases du traitement des eaux" dans "La Technique de l'Eau et de l'Assainissement" (N° 418 - Octobre 1981 - p21-32) ou dans l'article de M. POLASEK : "The significance of the root mean square velocity gradient and its calculation in devices for water treatment" dans Water SA-Vol.5 N° 4, October 1979,p196-207.

De manière préférée on induit dans la chambre de mélange 1 un gradient de vitesse approximativement compris entre 1000-1500 et 4000 $s^{-1}$ (voir plus), par exemple de l'ordre de 3000-3500 $s^{-1}$ et, dans la chambre d'agrégation, un gradient de vitesse approximativement compris entre 300-400 et 1500$s^{-1}$ (voir plus), par exemple de l'ordre de 700 à 900 $s^{-1}$.

Cela correspond approximativement à un temps de séjour dans la chambre 2 égal à 2,5 à 3,5 fois le temps de séjour dans la chambre de mélange 1.

On appréciera que les gradients de vitesse préconisés par l'invention sont très supérieurs à ceux actuellement pratiqués en floculation (moins de 30 $s^{-1}$). Cela permet de dire que les phénomènes d'agrégation/agrégation proposés par l'invention sont, de manière inattendue pour l'homme de l'art, de nature différente des phénomènes connus de floculation.

En fonctionnement, l'eau brute admise dans la première chambre ou cuve 1 d'agitation rapide, à la base de celle-ci, reçoit dès son entrée les réactifs, coagulant, floculant et sable fin ; à partir de la turbulence primaire, liée à la circulation de l'eau brute conditionnée que provoque la forte agitation dans la cuve, des turbulences secondaires avec très fort coefficient de cisaillement sont générées par le sable fin transporté dans le liquide ; d'où multiplication des contacts efficaces (chocs) entre particules colloïdales à coaguler (à décharger) et hydroxydes, par contact direct ou surtout par l'intermédiaire du sable fin qui a donc aussi un rôle de support. Le passage ensuite de l'eau en traitement dans la deuxième cuve ou chambre 2 sous agitation soutenue pendant environ 6 minutes assure, par l'efficacité du sable fin maintenu en suspension sans possibilité de dépôt intempestif, le conditionnement complet de l'eau à traiter : ce fluide devra en effet traverser plusieurs fois (N fois = rapport entre débit de circulation engendré par l'agitation et le débit d'eau à traiter en transit dans la capacité) une zone de turbulences fortes, isotropes, véritable barrière à "longueur de turbulence" très courtes, proche de l'échelle des impuretés colloïdales à décharger puis à rassembler par adsorbtion et pontage sur les grains de sable fin.

Les vitesses de l'eau et du sable fin en suspension, comme le profil du cheminement dans les canaux latéraux entre chambres d'agitation mécanique et de décantion sont prévus de manière à empêcher les dépôts de sable fin avant que celui-ci n'ait achevé son action, c'est-à-dire atteint la zone sous les lamelles 9. Dans cette zone, les particules, impuretés rassemblées en agrégats grenus très lourds puisque lestés de grains de sable fin, voient leur vitesse diminuer par rapport au liquide qui les transportent puis de décantent sur les lamelles 9 inclinées à 60° d'où elles glissent jusqu'à la tranchée à boues 22. Tandis que l'eau traitée captée au dessus des lamelles est évacuée généralement vers un complément de traitement en aval, les boues déposées dans la tranchée sont extraites séquentiellement dans l'exemple considéré ici (dans d'autres cas, les boues déposées sur radier seront raclées en continu, poussées dans une trémie unique puis extraites).

Ces boues sont ensuite conduites vers le système de séparation boues-sable fin, généralement des batteries de cyclones. Régénéré, la sable fin récupéré est renvoyé en tête de traitement au niveau de la coagulation.

L'eau circule ici de bas en haut dans la chambre de mélange 1 puis de haut en bas dans la chambre d'agrégation 2, de bas en haut dans la chambre latérale puis de haut en bas dans le couloir; elle circule de bas en haut dans les blocs lamellaires.

On appréciera que l'arête inclinée 21A définissant le bord inférieur de la paroi 21 assure une distribution approximativement uniforme sur les divers modules lamellaires 9.

On a pu vérifier que l'invention peut conduire, à qualités égales concernant l'eau brute et l'eau traitée, à un saut quantitatif très net par rapport aux solutions déjà connues qui font intervenir du sable fin, puisqu'on peut atteindre couramment des vitesses de décantation de 30 à 60 m/h, voire 90 m/h (avec un nombre de REYNOLDS très supérieur à 200).

Sachant que le dimensionnement d'un décanteur dépend directement de la vitesse de décantation admissible, on comprend l'intérêt économique de l'invention.

Des résultats d'essais pour une installation pilote de 100 à 150 m3/h sont présentés dans les tableaux 1 et 2 qui présentent d'une part les caractéristiques d'un régime d'agitation, et d'autre part des performances ainsi obtenues.

Le sable fin avait une granulométrie comprise entre 40 et 100 $\mu$m et il était injecté à des concentrations comprises entre 1 et 4 grammes par litre d'eau à traiter.

De manière connue, dans le tableau 2, NTU, M.E.S. et M.O. signifient respectivement : Nephelometric Turbidity Unit, Matières en Suspension et Matières Organiques.

TABLEAU 1

|  | Cuve 1 | Cuve 2 |
|---|---|---|
| Np<br>D(m) | 4<br>1,5 | 4<br>2,5 |
| N(t/s) | 1,06 | 0,25 |
| V(m3) | 3,33 | 10 |
| P(W) | 36177 | 6103 |
| G(s-1) | 3296 | 781 |

Tableau 2

| Eau brute | | | Vitesse de décantation | Taux de microsable g/l | Eau décantée obtenue | | |
|---|---|---|---|---|---|---|---|
| Turbidité NTU | MES mg/l | M.O. mg/l | | | Turbidité NTU | MES mg/l | M.O. mg/l |
| 16 | 26 | 3,5 | 30 | 3 | 0,9 | 2,0 | 1,7 |
| 12 | 20 | 3,8 | 30 | 1 | 1 | 2,0 | 1,9 |
| 12 | 18 | 3,6 | 30 | 1,8 | 0,8 | 1,4 | 1,8 |
| 40 | 70 | 3,4 | 60 | 2,5 | 3 | 4,0 | 1,6 |
| 42 | 75 | 3,5 | 60 | 2,8 | 2,5 | 5,0 | 1,7 |
| 41 | 74 | 3,5 | 80 | 3,0 | 3,0 | 6,0 | 1,7 |

Résultats d'essais réalisés sur une eau brute de surface (de Seine) et installation pilote de grandes dimensions (100 m3/h)

**Revendications**

1. Procédé de traitement d'eau par décantation selon lequel on fait circuler un écoulement d'eau brute dans une première zone, dite zone de mélange (1), dans laquelle on mélange à l'eau dans des proportions controlées des reactifs et un matériau granulaire insoluble dans l'eau et plus dense que

8

l'eau, puis dans une seconde zone, dite zone intermédiaire (2), puis dans une troisième zone, dite zone de décantation lamellaire (8), dans laquelle on laisse décanter l'écoulement dans un décanteur lamellaire et de laquelle on prélève de l'eau clarifiée, caractérisé en ce que :

- on induit (7) dans la zone intermédiaire des turbulences propres à générer des gradients de vitesse de l'ordre de 300 à 1500 s$^{-1}$ ou plus maintenant ce matériau granulaire en suspension et permettant l'aggrégation de colloïdes autour des particules de ce matériau granulaire, et on amène ce dernier en quasi-totalité dans la zone de décantation lamellaire,
- on évacue les boues recueillies dans cette zone de décantation lamellaire, on en extrait (D) le matériau granulaire que l'on rejette dans la zone de mélange pour obtenir ladite proportion controlée de matériau granulaire et on élimine (14) les boues sans matériau granulaire.

2. Procédé selon la revendication 1, caractérisé en ce que l'on maintient dans la zone de mélange (1) un gradient de vitesse sensiblement supérieur à celui que l'on maintient dans la zone intermédiaire (2).

3. Procédé selon la revendication 1 ou la revendication 2, caractérisé en ce que, le matériau granulaire étant du sable fin, on établit dans la zone intermédiaire d'agrégation (2) un gradient de vitesse compris entre 400 s$^{-1}$ et 1500 s$^{-1}$.

4. Procédé selon l'une quelconque des revendications 1 à 3, caractérisé en ce que, le matériau granulaire étant du sable fin, on établit dans la zone de mélange (1) un gradient de vitesse compris entre 1500 et 4000 s$^{-1}$.

5. Procédé selon la revendication 4, caractérisé en ce que le matériau granulaire étant du sable fin, le gradient de vitesse dans la zone de mélange (1) vaut entre 3000 et 3500 s$^{-1}$, et en ce que le gradient de vitesse dans la zone intermédiaire (2) vaut entre 700 et 900 s$^{-1}$.

6. Procédé selon l'une quelconque des revendications 1 à 5, caractérisé en ce que le matériau granulaire est du sable fin et a une granulométrie comprise entre 20 et 200 $\mu$m et en ce qu'il est injecté à une concentration vis à vis de l'eau brute comprise entre 1 et 4 g/l environ.

7. Procédé selon l'une quelconque des revendications 1 à 6, caractérisé en ce que le temps de séjour de l'eau dans la zone intermédiaire (2) vaut entre 2,5 et 3,5 fois le temps de séjour de l'eau dans la zone de mélange (1).

8. Procédé selon l'une quelconque des revendications 1 à 7, caractérise en ce que l'écoulement se fait de bas en haut dans la zone de mélange (1) et de haut en bas dans la zone intermédiaire (2).

9. Installation de traitement d'eau par décantation comportant, en série, une première chambre dite chambre de mélange (1) munie d'une voie principale d'arrivée (3) connectée a une source d'eau à traiter et de voies secondaires connectées à des sources de reactifs (4) et à une source de matériau granulaire insoluble dans l'éau et plus dense que l'eau ainsi que d'un élément d'agitation (6), une seconde chambre dite chambre intermédiaire (2) communiquant avec la première chambre, et une troisième chambre dite chambre de décantation lamellaire (8), communiquant avec la seconde chambre et munie à sa partie supérieure d'une voie de sortie (10) pour de l'eau clarifiée et à sa partie inférieure d'une zone de récupération de boues, caractérisée en ce que la chambre intermédiaire (2) comporte un élément d'agitation (7), relié à des moyens de mise en oeuvre âpte à la génération par l'élément d'agitation de gradiants de vitesse de l'ordre de 300 à 1500 s$^{-1}$ ou plus dans le milieu fluide et en ce que la zone de récupération des boues située à la partie inférieure de la chambre de décantation lamellaire est connectée à une voie d'évacuation (23) aboutissant à une station de séparation (D) apte à séparer le matériau granulaire des boues, et dont une voie de sortie se raccorde à ladite voie (5) reliée à la source de matériau granulaire.

10. Installation selon la revendication 9, caractérisée en ce que la chambre de mélange (1) et la chambre intermédiaire (2) sont de section approximativement carrée, et le rapport entre le côté de chacune de ces chambres et le diamètre de l'agitateur (6, 7) correspondant est compris entre 0,5 et 0,8 environ.

11. Installation selon la revendication 9 ou la revendication 10, caractérisée en ce que l'élément d'agitation (6) de la chambre de mélange (1) est un mobile à pales mû en rotation autour d un axe vertical par un moteur (28) apte à conférer aux pales des vitesses périphériques comprises entre 0,5 et 2 m/s, tandis que l'élément d'agitation (7) de la chambre intermédiaire (2) est un mobile à pales mû en rotation autour d'un axe vertical par un moteur (27) apte à conférer aux pales des vitesses périphériques comprises entre 0,2 et 2,5 m/s.

12. Installation selon l'une quelconque des revendications 9 à 11, caractérisée en ce que la circulation de l'eau à partir de la chambre de mélange (1) s'effectue par débordement au-dessus de l'arête horizontale supérieure (16A) d'une première paroi de séparation (16) entre la chambre de mélange (1) et la chambre intermédiaire (2), par écoulement au-dessous de l'arête horizontale (18A) d'une seconde paroi de séparation (18) entre la chambre intermédiaire et une chambre latérale (17), par débordement au-dessus de l'arête supérieure (20A) d'une cloison de séparation (20) entre cette chambre latérale (17) et un couloir latéral de distribution (19) longeant la chambre de décantation lamellaire (8), puis par écoulement sous l'arête inférieure (21A) d'une paroi de séparation (21) entre ce couloir latéral de distribution et la chambre de décantation lamellaire, cette arête inférieure (21A) étant inclinée vers le haut en s'éloignant de la chambre latérale.

13. Installation selon la revendication 12, caractérisée en ce que, la chambre intermédiaire (2) étant approximativement de section carrée, la hauteur entre l'arête supérieure (16A) de la première paroi (16) et l'arête inférieure (18A) de la seconde paroi (18) est comprise entre 1 et 3 fois le côté de la chambre intermédiaire (2), et l'élément d'agitation (7) est situé, vis à vis de l'arête supérieure (16A) de la paroi (16), à une profondeur comprise entre 0,5 et 0,9 fois cette hauteur.

14. Installation selon la revendication 12 ou la revendication 13, caractérisée en ce que l'arête inférieure inclinée (21A) de la paroi de séparation (21) entre le couloir latéral de distribution (19) et la chambre de décantation lamellaire (8) s'élève approximativement à partir du niveau de l'arête inférieure (18A) de la paroi de séparation (18) entre la chambre intermédiaire et la chambre latérale (15).

15. Installation selon l'une quelconque des revendications 12 à 14, caractérisée en ce que le fond de la chambre de décantation lamellaire (8) est muni de moyens (11) adaptés à faire circuler les boues vers une zone de concentration (22), située approximativement sous la chambre intermédiaire avec laquelle elle communique, et connectée à une voie d'évacuation des boues (23).

16. Installation selon revendication 15, caractérisée en ce que le fond de la chambre de décantation lamellaire est incliné vers ladite zone de concentration (22).

17. Installation selon l'une quelconque des revendications 9 à 16, caractérisée en ce que l'élément d'agitation (7) de la chambre intermédiaire (2) est une hélice à flux axial mue dans un sens tendant à s'opposer à l'écoulement de l'eau.

18. Installation selon l'une quelconque des revendications 9 à 17, caractérisée en ce que le matériau granulaire est sensiblement inerte du point de vue chimique et/ou biologique vis à vis de l'eau dans les conditions considérées.

19. Installation selon l une quelconque des revendications 9 à 17, caractérisée en ce que le matériau granulaire est actif du point de vue chimique et/ou biologique vis à vis de l'eau dans les conditions considérées.

## Claims

1. Method of treatment of water by sedimentation in which reagents are caused to circulate in a flow of untreated water in a first zone, called the mixing zone (1), in which are mixed with the water in predetermined proportions the reagents and a granular material which is insoluble in water and is heavier than the water, then in a second zone called the intermediate zone (2), then in a third zone called the lamellarr sedimentation zone (8), into which there discharges into a lamellarr settling chamber from which is drawn the clarified water, characterised in that:

turbulence is induced (7) in the intermediate zone to generate a velocity gradient of the order 300 to $1500s^{-1}$ or more appropriate to maintain this granular material in suspension and allowing the aggregation of colloids around the particles and this granular material, and this last is brought almost completely into the lamellarr sedimentation zone,

the sludge recovered from the lamellarr sedimentation zone are recovered, the granular material is extracted (D) to be recycled to the mixing zone to obtain the said predetermined proportion of granular material and the sludge without granular material is eliminated (1).

2. Method according to claim 1, characterised in that a velocity gradient is maintained in the mixing zone (1) which is considerably greater than that in the intermediate aggregation zone (2).

3. Method according to claim 1 and claim 2, characterised in that, when the granular material is of fine sand, there is established in the intermediate aggregation zone (2) a velocity gradient of between $400s^{-1}$ and $1500s^{-1}$.

4. Method according to any of claims 1 to 3, characterised in that, when the granular material is of fine sand, there is established in the mixing zone (1) a velocity gradient of between 1500 and $4000s^{-1}$.

5. Method according to claim 4, characterised in that, when the granular material is of fine sand, the velocity gradient in the mixing zone (1) is between 3000 and $3500s^{-1}$, and the velocity gradient in the aggregation zone (2) is between 700 and $900s^{-1}$.

6. Method according to any of claims 1 to 5, characterised in that, the granular material is of fine sand of grain size between 20 and 200 and this is injected at a concentration relative to the untreated water of between about 1 and 4g/litre.

7. Method according to any of claims 1 to 6 characterised in that the time that the water stays in the intermediate aggregation zone (2) is between 2.5 and 3.5 times the time that the water stays in the mixing zone (1).

8. Method according to any claims 1 to 7, characterised in that the flow is from bottom to top in the mixing zone (1) and from top to bottom in the intermediate aggregation zone (2).

9. Apparatus for the treatment of water by sedimentation comprising, in series, a first chamber called the mixing chamber (1) provided with an opening (3) connected to a source of water to be treated and secondary openings (4) for reagents and a source of granular material insoluble in water and which is heavier than water and a stirring element (6), a second chamber called the intermediate chamber (2) communicating with the first chamber, and a third chamber called the lamellar sedimentation chamber (8), communicating with the second chamber and provided at its upper part with an exit (10) for the clarified water and at its lower part with a zone for recovery of sludge, characterised in that the intermediate chamber (2) has a stirring element (7) which is used to generate by means of the stirring element velocity gradients of the order 300 to $1500s^{-1}$ or more in the middle of the fluid and the sludge recovery zone situated at the lower part of the lamellarr sedimentation chamber is connected to a path (23) leading to a separation stage (D) for separating the granular material from the sludge, and an exit path which connects the said path (5) to rejoin the supply of granular material.

10. Apparatus according to claim 9 characterised in that the mixing chamber (1) and the intermediate aggregation chamber (2) are approximately square section and the ratio between the side of each of the chambers and the diameter of the respective stirrer (6,7) is between about 0.5 and about 0.8.

11. Apparatus according to claim 9 or claim 10 characterised in that the stirring element (6) of the mixing chamber (1) is a bladed element rotated about a vertical axis by a motor (28) adapted to give the blades a peripheral speed of between 0.5 and 2 ms, whilst the stirring element (7) of the intermediate aggregation chamber (2) is a bladed element rotated about a vertical axis by a motor (27) adapted to give the blades a peripheral speed of between 0.2 and 2.5 $ms^{-1}$.

12. Apparatus according to any of claims 9 to 11 characterised in that the circulation of water from the mixing chamber (1) is effected by flow over the upper horizontal edge (16A) of a first separating wall (16) between the mixing chamber (1) and the intermediate aggregation chamber (2), and by flow under the horizontal edge (18A) of a second separating wall (18) between the intermediate aggregation chamber and a lateral chamber (17), by flow over the upper edge (20A) of a separating partition (20)

EP 0 330 582 B1

between this lateral chamber (17) and a lateral delivery passage (19) extending along the lamellarr sedimentation chamber (8), then by flow under the lower edge (21A) of a separating wall (21) between this lateral delivery passage and the lamellarr sedimentation chamber, this lower edge (21A) being inclined upwardly away from the lateral chamber.

13. Apparatus according to claim 12 characterised in that the intermediate aggregation chamber (2) has approximately a square section, the height between the upper edge (16A) of the first wall (16) and the lower edge (18A) of the second wall (18) is between 1 and 3 times the size of the intermediate chamber (2), and the stirring element (7) is situated, relative to the upper edge (16A) of the wall (16) at a depth of between 0.5 and 0.9 times this height.

14. Apparatus according to claim 12 or claim 13 characterised in that the lower inclined edge (21A) of the separating wall (21) between the lateral delivery passage (19) and the lamellarr sedimentation chamber (8) rises, approximately from the level of the lower edge (18) of the separating wall (18), between the intermediate aggregation chamber and the lateral chamber (15).

15. Apparatus according to any of claims 12) to 14 characterised in that the bottom of the lamellarr sedimentation chamber (8) is provided with means (11) adapted to ensure movement of the deposits towards a concentration zone (22), situated approximately under the intermediate aggregation chamber with which it communicates, and connected to a path (23) for removal of the deposits.

16. Apparatus according to claim 15 characterised in that the bottom of the lamellarr sedimentation chamber is inclined towards the concentration zone (22)

17. Apparatus according to any of claims 9 to 16 characterised in that the stirring element (7) of the intermediate aggregation chamber (2) is a helix providing an axial flow of a sense tending to oppose the flow of water.

18. Apparatus according to any of claims 9 to 17 characterised in that the granular material is substantially inert from a chemical and/or biological point of view with regard to the water in the respective conditions.

19. Apparatus according to any of claims 9 to 17 characterised in that the granular material is active from a chemical and/or biological point of view with regard to the water in the respective conditions.

**Patentansprüche**

1. Verfahren zur Klärbehandlung von Wasser, bei dem man einen Abwasserstrom in einer ersten, als Mischzone (1) bezeichneten Zone, in der man dem Wasser in kontrollierten Verhältnissen Reagenzien und ein wasserunlösliches, granuliertes Material mit größerer Dichte als Wasser beimischt, sodann in einer zweiten, als Zwischenzone (2) bezeichneten Zone und dann in einer dritten, als Lamellen-Klärzone (8) bezeichneten Zone zirkulieren läßt, in der man den Strom in einer Lamellen-Kläranlage klären läßt und aus der man gereinigtes Wasser abzieht, **dadurch gekennzeichnet**, daß
   - man in der Zwischenzone geeignete Turbulenzen auslöst (7), um Geschwindigkeitsgradienten in der Größenordnung von 300 bis 1500 s$^{-1}$ oder mehr zu erzeugen, wobei das granulierte Material in Suspension gehalten und die Aggregation von Kolloiden um Teilchen dieses granulierten Materials herum zugelassen wird, und man nahezu die Gesamtheit des granulierten Materials in die Lamellen-Klärzone überführt,
   - und daß man den in dieser Lamellen-Klärzone gesammelten Schlamm abzieht, daraus das granulierte Material abscheidet (D), das wieder in die Mischzone zurückgeführt wird, um besagtes kontrolliertes Verhältnis an granuliertem Material zu erreichen, und man den Schlamm ohne granuliertes Material beseitigt (14).

2. Verfahren nach Anspruch 1, dadurch gekennzeichnet, daß man in der Mischzone (1) einen deutlich größeren Geschwindigkeitsgradienten als in der Zwischenzone (2) aufrechterhält.

3. Verfahren nach Anspruch 1 oder Anspruch 2, dadurch gekennzeichnet, daß das granulierte Material Feinsand ist und daß man in der Aggregations-Zwischenzone (2) einen Geschwindigkeitsgradienten im Bereich von 400 s$^{-1}$ bis 1500 s$^{-1}$ einstellt.

4. Verfahren nach einem der Ansprüche 1 bis 3, dadurch gekennzeichnet, daß das granulierte Material Feinsand ist und daß man in der Mischzone (1) einen Geschwindigkeitsgradienten im Bereich von 1500 s$^{-1}$ bis 4000 s$^{-1}$ einstellt.

5. Verfahren nach Anspruch 4, dadurch gekennzeichnet, daß das granulierte Material Feinsand ist und daß in der Mischzone (1) der Geschwindigkeitsgradient zwischen 3000 und 3500 s$^{-1}$ und in der Zwischenzone (2) zwischen 700 und 900 s$^{-1}$ beträgt.

6. Verfahren nach einem der Ansprüche 1 bis 5, dadurch gekennzeichnet, daß das granulierte Material Feinsand ist und eine Granulatgröße im Bereich von 20 bis 200 $\mu$m aufweist sowie gegenüber dem Abwasser mit einer Konzentration im Bereich von etwa 1 bis 4 g/l eingespritzt wird.

7. Verfahren nach einem der Ansprüche 1 bis 6, dadurch gekennzeichnet, daß die Verweildauer des Wassers in der Zwischenzone (2) zwischen dem 2,5- und 3,5-fachen der Verweildauer des Wassers in der Mischzone (1) beträgt.

8. Verfahren nach einem der Ansprüche 1 bis 7, dadurch gekennzeichnet, daß der Strom in der Mischzone (1) von unten nach oben und in der Zwischenzone (2) von oben nach unten läuft.

9. Vorrichtung zur Klärbehandlung von Wasser, die hintereinander eine erste, als Mischkammer (1) bezeichnete Kammer mit einer Hauptzulauf-Leitung (3), die an eine Quelle für zu behandelndes Wasser angeschlossen ist, und mit zweiten Leitungen, die an Quellen für Reagenzien (4) und an eine Quelle für granuliertes, wasserunlösliches Material mit größerer Dichte als Wasser angeschlossen sind, sowie mit einem Rührelement (6), ferner eine zweite, als Zwischenkammer (2) bezeichnete Kammer, die mit der ersten Kammer in Verbindung steht, und eine dritte, als Lamellen-Klärkammer (8) bezeichnete Kammer aufweist, die mit der zweiten Kammer in Verbindung steht und an ihrem oberen Teil mit einer Abzugsleitung (10) für gereinigtes Wasser sowie an ihrem unteren Teil mit einer Zone zur Rückgewinnung von Schlamm versehen ist, dadurch gekennzeichnet, daß die Zwischenkammer (2) ein Rührelement (7) aufweist, das an Betätigungsmittel angeschlossen ist, die über dieses Rührelement zur Erzeugung von Geschwindigkeitsgradienten in der Größenordnung von 300 bis 1500 s$^{-1}$ oder mehr im Fluidmedium geeignet sind, und daß die Zone zur Rückgewinnung von Schlamm, die im unteren Teil der Lamellen-Klärkammer liegt, mit einer Abführleitung (23) verbunden ist, die zu einer Trennstation (D) zum Trennen des granulierten Materials vom Schlamm führt, von der ein Ausgang an die Leitung (5) angeschlossen ist, die mit der Quelle für granuliertes Material verbunden ist.

10. Vorrichtung nach Anspruch 9, dadurch gekennzeichnet, daß die Mischkammer (1) und die Zwischenkammer (2) von angenähert quadratischem Querschnitt sind und das Verhältnis zwischen der Seite jeder dieser Kammern und dem Durchmesser des entsprechenden Rührers (6,7) im Bereich von etwa 0,5 bis 0,8 liegt.

11. Vorrichtung nach Anspruch 9 oder Anspruch 10, dadurch gekennzeichnet, daß das Rührelement (6) der Mischkammer (1) ein mit Flügeln besetzter Drehkörper ist, der um eine vertikale Achse durch einen Motor (28) in Drehung versetzbar ist, der seinerseits dazu eingerichtet ist, an den Flügeln Umfangsgeschwindigkeiten im Bereich von 0,5 bis 2 m/s zu erzeugen, während das Rührelement (7) der Zwischenkammer (2) ein mit Flügeln besetzter Drehkörper ist, der um eine vertikale Achse durch einen Motor (27) in Drehung versetzbar ist, der seinerseits dazu eingerichtet ist, an den Flügeln Umfangsgeschwindigkeiten im Bereich von 0,2 bis 2,5 m/s zu erzeugen.

12. Vorrichtung nach einem der Ansprüche 9 bis 11, dadurch gekennzeichnet, daß die Zirkulation des Wassers ab der Mischkammer (1) durch Überlaufen über die obere horizontale Kante (16A) einer ersten Trennwand (16) zwischen der Mischkammer (1) und der Zwischenkammer (2), durch Unterströmen der horizontalen Kante (18A) einer zweiten Trennwand (18) zwischen der Zwischenkammer und einer Seitenkammer (17), durch Überlaufen über die obere Kante (20A) einer Zwischentrennwand (20) zwischen dieser Seitenkammer (17) und einem Verteilungsseitenkanal (19), der sich entlang der Lamellen-Klärkammer (8) erstreckt, und anschließend durch Unterströmen der Unterkante (21A) einer Trennwand (21) zwischen dem Verteilungsseitenkanal und der Lamellen-Klärkammer erfolgt, wobei diese Unterkante (21A) von der Seitenkammer weg nach oben hin geneigt ist.

13. Vorrichtung nach Anspruch 12, dadurch gekennzeichnet, daß die Zwischenkammer (2) einen annähernd quadratischen Querschnitt aufweist, die Höhe zwischen der Oberkante (16A) der ersten Wand (16) und der Unterkante (18A) der zweiten Wand (18) im Bereich vom 1- bis zum 3-fachen der Seite der Zwischenkammer (2) liegt, und daß das Rührelement (7) gegenüber der Oberkante (16A) der Wand (16) in einer Tiefe entsprechend dem 0,5-fachen bis zum 0,9-fachen dieser Höhe angeordnet ist.

14. Vorrichtung nach Anspruch 12 oder Anspruch 13, dadurch gekennzeichnet, daß die geneigte Unterkante (21A) der Trennwand (21) zwischen dem Verteilungsseitenkanal (19) und der Lamellen-Klärkammer (8) ungefähr von der Höhe der Unterkante (18A) der Trennwand (18) zwischen der Zwischenkammer und der Seitenkammer (15) aus ansteigt.

15. Vorrichtung nach einem der Ansprüche 12 bis 14, dadurch gekennzeichnet, daß der Boden der Lamellen-Klärkammer (8) mit Mitteln (11) versehen ist, die geeignet sind, den Schlamm zu einer Konzentrationszone (22) hin zu leiten, die angenähert unter der Zwischenkammer, mit der sie in Verbindung steht, angeordnet und an eine Ablaßleitung (23) für den Schlamm angeschlossen ist.

16. Vorrichtung nach Anspruch 15, dadurch gekennzeichnet, daß der Boden der Lamellen-Klärkammer zu dieser Konzentrationszone (22) hin geneigt ist.

17. Vorrichtung nach einem der Ansprüche 9 bis 16, dadurch gekennzeichnet, daß das Rührelement (7) der Zwischenkammer (2) ein axial förderndes Flügelrad ist, das in einer Richtung entgegen der des Wasserstromes betreibbar ist.

18. Vorrichtung nach einem der Ansprüche 9 bis 17, dadurch gekennzeichnet, daß das granulierte Material unter chemischen und/oder biologischen Gesichtspunkten gegenüber dem Wasser bei den betrachteten Bedingungen im wesentlichen reaktionslos ist.

19. Vorrichtung nach einem der Ansprüche 9 bis 17, dadurch gekennzeichnet, daß das granulierte Material unter chemischen und/oder biologischen Gesichtspunkten gegenüber dem Wasser bei den betrachteten Bedingungen aktiv ist.

FIG. 1

EP 0 330 582 B1

FIG.2

FIG. 3

EP 0 330 582 B1

FIG. 6

FIG. 5

FIG. 4